# EUROPÄISCHE PATENTSCHRIFT

(11) **EP 1 121 194 B1**
(45) Veröffentlichungstag und Bekanntmachung des Hinweises auf die Patenterteilung: **02.01.2003**
(21) Anmeldenummer: 99953812.7
(22) Anmeldetag: 14.10.1999
(51) Int. Cl.: B01F 13/00

(54) **VORRICHTUNG ZUM VERMISCHEN ZWEIER PASTÖSER MASSEN, INSBESONDERE ZUM VERMISCHEN EINER DENTAL-ABFORMMASSE MIT EINER KATALYSATORMASSE**
DEVICE FOR MIXING TWO PASTY MATERIALS, ESPECIALLY FOR MIXING A DENTAL IMPRESSION MATERIAL WITH A CATALYST MATERIAL
DISPOSITIF POUR MELANGER DEUX MATIERES PATEUSES, EN PARTICULIER POUR MELANGER UNE MATIERE POUR EMPREINTE DENTAIRE AVEC UNE MATIERE DE CATALYSE

(30) Priorität: 14.10.1998 DE 29818280 U
(43) Veröffentlichungstag der Anmeldung: 08.08.2001
(73) Patentinhaber: Kettenbach GmbH & Co. KG, 35713 Eschenburg (DE)
(72) Erfinder: BUBLEWITZ, Alexander, D-35745 Herborn (DE); SUCHAN, Matthias, D-57627 Hachenburg (DE)
(74) Vertreter: Hilleringmann, Jochen
(86) Internationale Anmeldenummer: EP9907703
(87) Internationale Veröffentlichungsnummer: WO00021652

(56) Entgegenhaltungen:
- EP-A- 0 087 029
- EP-A- 0 492 412
- EP-A- 0 603 492
- WO-A-95/22402
- DE-A- 2 949 369
- US-A- 3 711 067
- US-A- 4 951 843

## Beschreibung

Die Erfindung betrifft eine Vorrichtung zum Vermischen zweier pastöser Massen, bei denen es sich insbesondere um eine Dental-Abformmasse und eine Katalysatormasse zur Beschleunigung der Polymerisation der Dental-Abformmasse handelt.

Die erfindungsgemäße Vorrichtung wird auf die beiden Auslassstutzen einer Austragvorrichtung aufgesteckt, mittels derer durch Aufbringen von Druck auf die pastösen Massen diese in die Mischvorrichtung eingebracht und nach dem Vermischen in der Mischvorrichtung aus dieser als Gemisch ausgegeben werden.

In einer Vielzahl von technischen Anwendungsgebieten ist es erforderlich, zwei getrennt gelagerte pastöse Massen in vermischter Form zu applizieren. Hierbei bedient man sich entweder dynamischer oder statischer Durchlaufmischer, die während des Fließens der pastösen Massen durch ein Mischergehäuse die Massen untereinander vermischen. Ein dynamischer Mischer ist aus EP-A-0 492 412 bekannt. Diese bekannte Vorrichtung weist ein im wesentlichen rohrförmiges Mischergehäuse mit einer darin drehbar angeordneten Mischerwelle auf. Die Mischerwelle weist eine Vielzahl von radial abstehenden stegförmigen Mischerelementen auf, die dann, wenn die Mischerwelle angetrieben wird, für eine Umlenkung der Massenströme sorgt und damit die beiden pastösen Massen miteinander vermischt. Die pastösen Massen gelangen über eine radiale Stirnwand am hinteren Ende des Mischergehäuses in dieses hinein. Die Stirnwand weist zu diesem Zweck zwei Einlassstutzen auf, die auf die Auslassstutzen einer Vorrichtung zum Ausbringen der pastösen Massen aufgesteckt werden.

Zur Vermeidung von Rückkontaminationen in die Auslassstutzen der Austragvorrichtung weist der bekannte Mischer von der Mischerwelle abstehende Abstreiferelemente auf, die auf der Innenseite der rückwärtigen Stirnwand sich lang bewegen und über die Einlassstutzen ankommendes pastöses Material zur Seite transportieren. Das über den einen Einlassstutzen in das Gehäuseinnere eingebrachte pastöse Material wird durch diese Abstreifer zumindest teilweise in Umfangsrichtung transportiert und gelangt damit in den Bereich des anderen Einlassstutzens, wo es dann, wenn der dynamische Mischer nicht angetrieben ist, zu einer Rückkontamination bis in den Einlassstutzen und weiter in den mit diesem verbundenen Auslassstutzen der zugehörigen Austragvorrichtung kommen kann.

Der Erfindung liegt die Aufgabe zugrunde, eine Vorrichtung zum Vermischen zweier pastöser Massen zu schaffen, bei der das Risiko von Rückkontaminationen reduziert ist.

Zur Lösung dieser Aufgabe wird mit der Erfindung eine Vorrichtung zum Vermischen zweier pastöser Massen nach Anspruch 1 vorgeschlagen.

Bei der erfindungsgemäßen Mischervorrichtung (nachfolgend auch dynamischer Mischer genannt) erfolgt die Zufuhr der zu vermischenden pastösen Massen radial in den im wesentlichen rohrförmigen Abschnitt des Mischergehäuses hinein. Zu diesem Zweck ist der rohrförmige Abschnitt des Gehäuses mit zwei insbesondere diametral gegenüberliegenden radialen Einlassöffnungen versehen. Die pastösen Massenströme, die durch Aufbringen von Druck in den Mischer eingebracht werden, treffen innerhalb des rohrförmigen Abschnitts des Gehäuses auf mindestens ein Umlenkelement, das sich um die Achse der Mischerwelle herum erstreckt. Dieses Umlenkelement rotiert mit der sich drehenden Mischerwelle und weist eine schräg zu einer Radialebene der Achse verlaufende Umlenkfläche auf. Mit anderen Worten handelt es sich bei dem mindestens einen Umlenkelement um einen im wesentlichen sägezahnförmigen Keil, der gebogen um die Achse der Mischerwelle herum verläuft. Dieses Umlenkelement fungiert wie eine Förderschnecke bei einer Schneckenpumpe und sorgt dafür, dass das anstehende pastöse Material direkt in axialer Richtung von den Einlassöffnungen in Richtung der Auslassöffnung abgefördert wird. Damit werden Rückkontaminationen zuverlässig verhindert, da nämlich stets das mindestens eine Umlenkelement den axialen Transport der durch die Einlassöffnungen in den rohrförmigen Abschnitt des Mischergehäuses gelangenden pastösen Massen unterstützt.

Wie bereits zuvor dargelegt, kann das Umlenkelement eine Keilform aufweisen. Alternativ zu dieser Keilform bietet es sich an, das Umlenkelement als einen schraubenlinienförmig sich um die Achse herum verlaufenden Steg auszubilden; in diesem Ausführungsbeispiel weist das Umlenkelement also die Form eines Gewindes auf. Derartige umlaufende Stege sind von Schneckenpumpen und Förderschnecken her bekannt.

Vorteilhafterweise sind in Höhe der radialen Einlassöffnungen des rohrförmigen Abschnitts des Gehäuses zwei Umlenkelemente auf der Achse angeordnet, die zweckmäßigerweise diametral einander gegenüberliegend angeordnet sind. Diese Umlenkelemente bzw. jedes Umlenkelement erstreckt sich dabei vorzugsweise über einen Winkelbereich von 180° bis 90°.

Um den erfindungsgemäßen dynamischen Mischer auf die beiden Auslassstutzen einer Auspressvorrichtung aufstecken zu können, weist das Gehäuse an seinem hinteren Ende ein quer zur Achse gerichtetes Einsatzteil auf, von dem zwei Einlassstutzen abstehen. Das Einsatzteil befindet sich in einem konisch aufgeweiteten, sich an den rohrförmigen Abschnitt anschließenden Gehäuseabschnitt des Mischer und weist zwei Kanäle auf, die sich von den Einlassstutzen aus erstrecken. Diese beiden Kanäle verlaufen unter Abwinklung radial in eine mittige zylindrische Aufnahmevertiefung auf der Innenseite des Einsatzteils, von der die Achse der Mischerwelle mit dem mindestens einen Umlenkelement aufgenommen ist. Somit bildet also die zylindrische Aufnahmevertiefung des Einsatzteils einen Teilbereich des rohrförmigen Gehäuseabschnitts des Mischers.

In vorteilhafter Weiterbildung der Erfindung befinden sich innerhalb des rohrförmigen Gehäuseabschnitts zwischen den radialen Einlassöffnungen und der axialen Auslassöffnung mehrere Mischerelemente, die nach Art von radialen Stegen von der Achse abstehen und bis nahe der Innenfläche des rohrförmigen Gehäuseabschnitts reichen. Diese Mischerelemente sind innerhalb mehrerer Radialebenen von der Welle abstehend angeordnet und führen zu einer Umlenkung der sich axial durch das Gehäuse hindurch erstreckenden Massenströme. Hierdurch kommt es zur gewünschten Vermischung. Der Vermischungseffekt verstärkt sich noch, wenn diese Mischerelemente, die aufgrund ihrer radialen Ausrichtung den direkten Strom zwischen den Einlassöffhungen und der Auslassöffnung verhindern, sich über einen größeren Winkelbereich, beispielsweise 90° erstrecken. Dies kann dadurch realisiert werden, dass benachbarte Mischerelemente durch einen umlaufenden Teilabschnitt miteinander verbunden sind. Auf diese Weise entstehen also nach Art von Viertelkreisen ausgebildete Mischerelemente, wobei es günstig sein kann, wenn diese Viertelkreise in ihren in Umfangsrichtung betrachtet mittleren Abschnitten weiter von der Innenfläche des rohrformigen Abschnitts des Gehäuses abstehen als an ihren Enden. Zweckmäßig ist es, wenn von Radialebene zu Radialebene in Umfangsrichtung versetzt jeweils zwei benachbarte radial verlaufende Mischerelemente untereinander in der oben beschriebenen Weise verbunden sind.

Zusätzlich zu den zuvor beschriebenen starren Mischerelementen ist es für den Durchmischungsvorgang von Vorteil, wenn die Mischerwelle zusätzliche flexible Abstreiferelemente aufweist, die aufgrund ihrer Flexibilität bzw. aufgrund zumindest ihrer flexibel ausgebildeten von der Achse beabstandeten freien Enden an der Innenwand des rohrformigen Gehäuses entlangstreichen.

Nachfolgend wird anhand der Figuren ein Ausführungsbeispiel der Erfindung näher erläutert. Im einzelnen zeigen:
- Fig. 1: eine Gesamtseitenansicht einer Austragvorrichtung für vermischte pastöse Komponenten,
- Fig. 2: einen Längsschnitt durch den dynamischen Mischer, wie er bei der Austragvorrichtung gemäß Fig. 1 eingesetzt wird,
- Fign. 3 bis 6: Querschnittsansichten durch den Mischer gemäß Fig. 2 entlang der dort angegebenen Linien III-III, IV-IV, V-V und VI-VI und
- Fig. 7: eine Querschnittsansicht ähnlich der gemäß Fig. 6, jedoch bei einer alternativen Ausgestaltung der Mischerwelle.

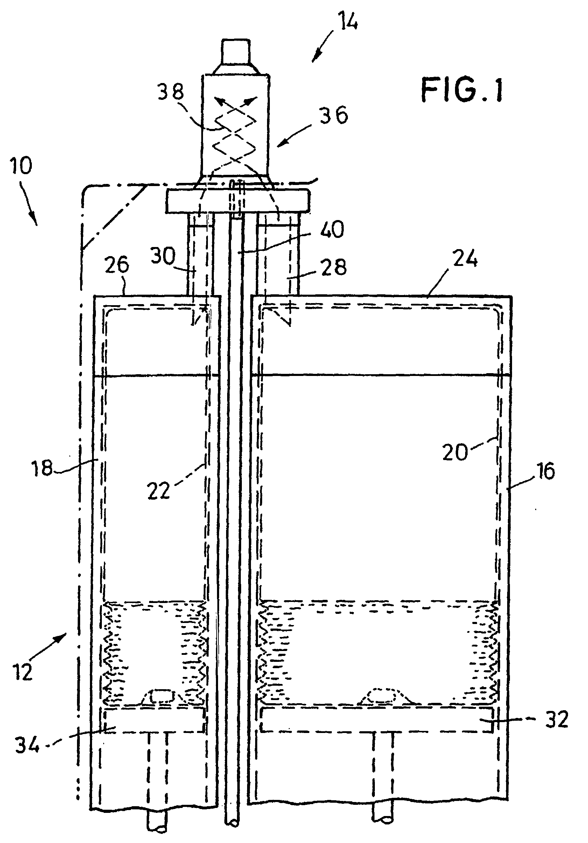

In Fig. 1 ist eine Austragvorrichtung 10 für zwei miteinander zu vermischende pastöse Komponenten in Seitenansicht dargestellt. Die Vorrichtung 10 umfasst einen Auspressteil 12 und einen Mischerteil 14, wobei der Auspressteil 12 zwei Druckbehälter 16,18 zur Aufnahme zweier die pastösen Massen beinhaltenden Schlauchbeutel 20,22 aufweist. An den vorderen stirnseitigen Enden 24,26 der Druckbehälter 16,18 weisen diese Auslassstutzen 28,30 auf, über die bei Ausübung eines Drucks auf das hintere Ende der Schlauchbeutel 20,22 deren Inhalt ausgebracht wird. Die Druckbeaufschlagung der Schlauchbeutel 20,22 erfolgt mittels Druckstempeln 32,34, die motorisch angetrieben sind, was hier nicht näher dargestellt ist.

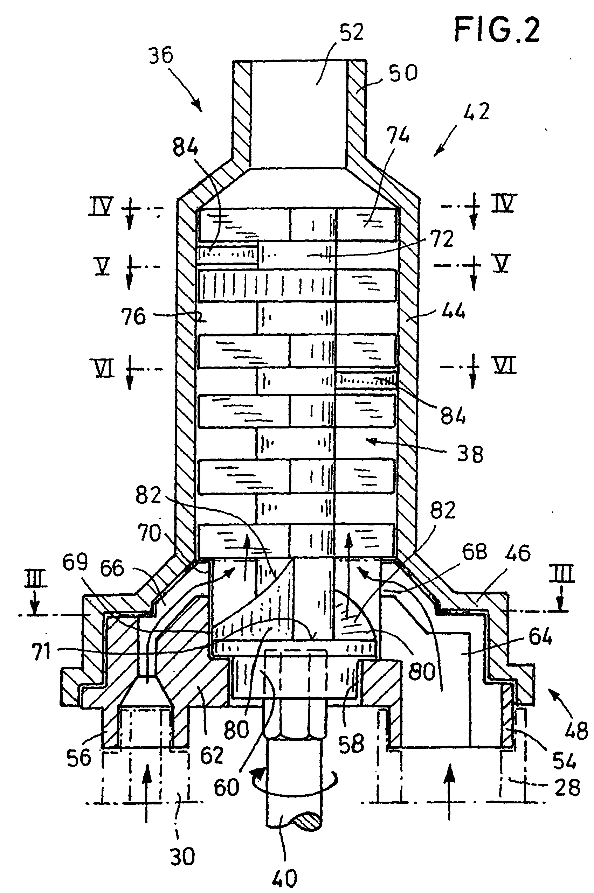

Auf die Auslassstutzen 28,30 ist ein dynamischer Mischer 36 aufgesteckt, der anhand der Fign. 2 bis 7 weiter unten genauer beschrieben werden wird. Ganz allgemein lässt sich zu diesem dynamischen Mischer 36 sagen, dass seine Mischerwelle 38 motorisch angetrieben ist. Zu diesem Zweck ist die Mischerwelle 38 mit einer Antriebsstange 40 kuppelbar, die von einem ebenfalls nicht dargestellten Motor drehend angetrieben wird.

Die Einzelheiten des dynamischen Mischers 36 werden insbesondere anhand von Fig. 2 deutlich. In dieser Figur ist ein Längsschnitt durch den Mischer 36 dargestellt. Der Mischer 36 weist ein Gehäuse 42 auf, das einen im wesentlichen zylindrischen bzw. rohrförmigen Abschnitt 44 mit einem konisch aufgeweiteten Endabschnitt 46 an dem dem Auspresswerkzeug 12 zugewandten hinteren Ende 48 und ein verjüngtes vorderes Ende 50 aufweist. Das verjüngte Ende 50 ist als Auslassstutzen ausgebildet und definiert die Auslassöffnung 52 für das Materialgemisch, während am hinteren Ende 48 des Gehäuses 42 zwei Einlassstutzen 54,56 angeordnet sind, die auf die Auslassstutzen 28,30 des Auspresswerkzeugs 12 aufsteckbar sind. Zwischen den beiden Einlassstutzen 54 befindet sich eine Durchbrechung 58, in der das eine Ende 60 der Mischerwelle 38 drehbar gelagert ist. Über diese Durchbrechung ist die Antriebsstange 40 mit der Mischerwelle 38 kuppelbar.

Die Einlassstutzen 54,56 und die Durchbrechung 58 sind in einem Einsatzteil 62 ausgebildet, das am hinteren Ende 48 des Gehäuses 42 in dessen konischen Aufweitungsabschnitt 46 eingesteckt ist. Ausgehend von den Einlassstutzen 54,56 erstrecken sich durch das Einsatzteil 62 zwei Kanäle 64,66, die unter Umlenkung in radialen Öffnungen 68,70 münden. Diese Einlassöffnungen 68,70 sind bezogen auf den zylindrischen Abschnitt 44 des Mischergehäuses 42 radial angeordnet. Über die Kanäle 64,66 werden die beiden pastösen Komponenten in den dynamischen Mischer 36 hinein transportiert, wo sie dann in radialer Richtung auf die Mischerwelle 38 auftreffen.

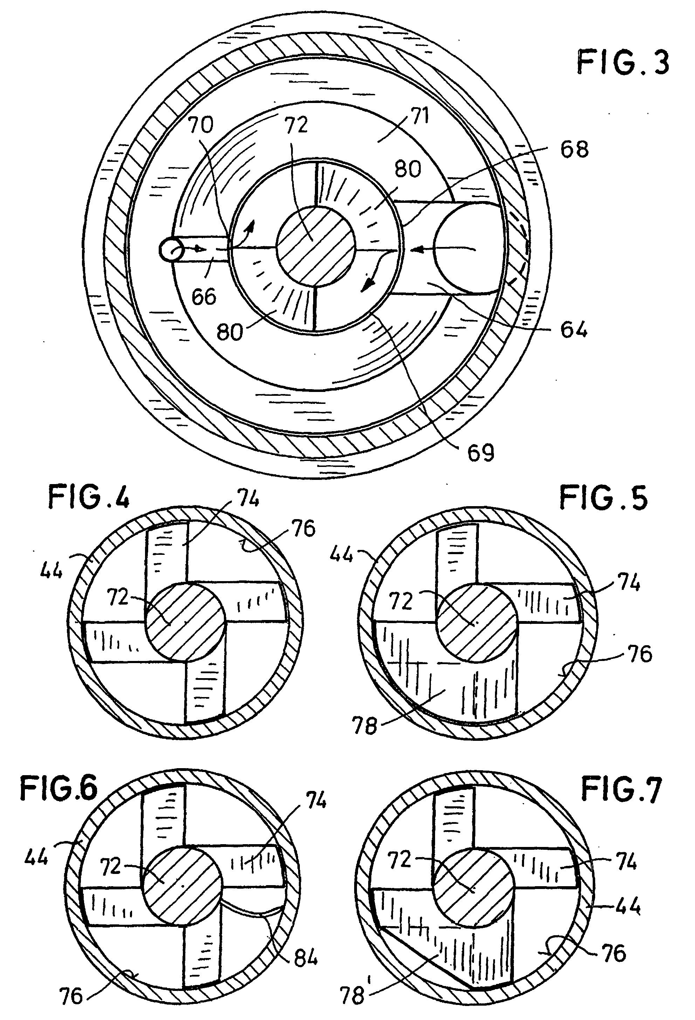

Wie anhand von Fign. 2 und 3 zu erkennen ist, weist das Einsatzteil 62 eine zentrale im wesentlichen zylindrische Aufnahmevertiefung 69 auf, die konzentrisch zur Durchbrechung 58 angeordnet ist und in die die Mischerwelle 38 eingesetzt ist. In der zylindrischen Wandung 71 der Aufnahmevertiefung 69 sind die Einlassöffnungen 68,70 eingebracht. Ferner sind in diesem Bereich auch die Kanäle 64,66 ausgebildet. Diese Kanäle 64,66 sind als oben offene Nuten oder Aussparungen ausgebildet, die zusammen mit dem im wesentlichen konisch aufgeweiteten Gehäuseabschnitt 46 die allseits geschlossenen Kanäle bilden.

Die Mischerwelle 38 weist eine drehbar gelagerte Achse 72 auf, von der in einer Vielzahl von Radialebenen jeweils vier stegförmige Mischerelemente 74 im wesentlichen radial abstehen. Die genaue Anordnung dieser Mischerelemente 74 ergibt sich aus der Schnittdarstellung gemäß Fig. 4. Zu erkennen ist, dass die einen in Umfangsrichtung liegenden Begrenzungsseitenkanten der Mischerelemente 74 im wesentlichen tangential zur Umfangsfläche der Achse 72 verlaufen. Wie sich aus Fig. 4 ergibt, sind also pro Radialebene vier Mischerelemente 74 vorgesehen, die gemäß Fig. 2 bis nahe an die Innenfläche 76 des zylindrischen Gehäuseabschnitts 44 reichen. Der gesamte Bereich zwischen den Einlassöffnungen 68,70 und dem Ende der Mischerwelle 38, die sich bis zum sich verjüngenden Ende 50 des Mischergehäuses 42 erstreckt, ist mit diesen Mischerelemente 74 versehen. Zusätzlich weist die Mischerwelle 38 nach Art von Viertelkreisflächen ausgebildete Mischerelemente 78 auf, die durch Verbinden jeweils zweier benachbarter Mischerelemente 74 eine Radialebene gebildet sind (siehe beispielsweise die Schnittdarstellung gemäß Fig. 5). In dieser Ausgestaltung ist die radial außenliegende Begrenzungskante des Mischerelemente 78 kreisbogenförmig ausgebildet, während sie bei der Alternativen gemäß Fig. 7 sekantiell verläuft. Das Mischerelement 78' gemäß Fig. 7 weist also in einem mittleren Umfangsabschnitt einen größeren Abschnitt zur Innenfläche 76 des zylindrischen Gehäuseabschnitts 44 auf.

Während die Mischerelemente 74,78,78' aufgrund ihrer radialen Erstreckung bis nahe an den zylindrischen Gehäuseabschnitt 44 bei Rotation der Mischerwelle 38 für eine Umlenkung und damit Verwirbelung der an sich axial strömenden pastösen Massen sorgen, weist die Mischerwelle 38 im Bereich der radialen Einlassöffnungen 68,70 zwei Umlenkelemente 80 auf, die nach Art einer Förderschnecke ausgebildet sind. Die Umlenkelemente 80 sind als sägezahnförmige Keile ausgebildet, die sich über etwa 90° um die Achse 72 der Mischerwelle 38 herum erstrecken. Die Umlenkelemente 80 weisen eine in Umfangsrichtung ansteigende Umlenkfläche 82 auf, die in Richtung zum Auslassende 52 des dynamischen Mischers 36 weist und winklig zu einer radial zur Achse 72 verlaufenden Ebene verlaufen. Diese Umlenkelemente 80 verlaufen also abschnittsweise schraubenlinienförmig und sorgen für eine axiale Bewegungskomponente der pastösen Massenströme. Damit unterstützen die Umlenkelemente 80 den Abtransport von pastöser Masse, die aus den Einlassöffnungen 68,70 in den zylindrischen Gehäuseabschnitt 44 eindringt. Dieses unterstützende und damit verstärkende Abführen der pastösen Massen in axialer Richtung verringert die Gefahr der Kontamination der beiden pastösen Massen, d.h. die ungewollte Vermischung bzw. Rückkontamination der beiden pastösen Massen über die Einlassöffnungen 68,70 in die Kanäle 64,66 hinein und gegebenenfalls weiter bis in die Auslassstutzen 28,30. Denn wenn es in diesen Bereichen zu einer Kontamination und damit zu einer Polymerisation kommt, lässt sich aufgrund der Verstopfung der Auslassstutzen 28,30 das gegebenenfalls noch in den Schlauchbeuteln 20,22 befindliche Restmaterial nicht mehr austragen.

Anhand von Fig. 6 soll noch auf ein weiteres Merkmal des dynamischen Mischers 36 eingegangen werden. Bei den zuvor erwähnten Mischerelementen 74 handelt es sich um starre im wesentlichen radial abstehende Stege, die aufgrund der Rotation der Achse 72 zu einer Verwirbelung der Massenströme führen. Zusätzlich zu den starren Mischerelementen 74 weist der dynamische Mischer 36 nach Art von dünnen flexiblen Stegen ausgebildete weitere Mischerelemente 84 auf, die von innen an der Innenseite 76 des zylindrischen Gehäuseabschnitts 44 entlangstreichen. Auch diese zusätzlichen flexiblen Mischerelemente 84 sorgen für eine Verwirbelung der Massenströme. Von den flexiblen Mischerelementen 84 existieren in mehreren aufeinanderfolgenden Radialebenen der Mischerwelle 38 jeweils eines pro Ebene, wobei diese Mischerelemente 84 um einen konstanten Winkelbereich von Radialebene zu Radialebene versetzt angeordnet sind. Selbiges gilt für die Mischerelemente 78 bzw. 78', die jeweils zwei benachbarte Mischerelemente 74 miteinander verbinden und ebenfalls um in diesem Fall 90° versetzt von Radialebene zu Radialebene angeordnet sind. Die Mischerelemente 84 und die Mischerelemente 78 bzw. 78' sind also längs einer Schraubenlinie um die Achse 72 herum gleichmäßig verteilt angeordnet. Beide Mischerelementtypen eigenen sich vorzüglich für eine homogene Durchmischung der pastösen Massen in dem auch als Durchlaufmischer zu bezeichnenden dynamischen Mischer 36.

## Patentansprüche

1. Vorrichtung zum Vermischen zweier pastöser Massen, insbesondere eine Dental-Abformmasse mit einer Katalysatormasse, mit
- einem Gehäuse (42), das einen im wesentlichen rohrförmigen Abschnitt (44) mit zwei Einlassöffnungen (68,70) an dessen hinteren Ende für die beiden pastösen Massen und einer Auslassöffnung (52) für die vermischten pastösen Massen an dem vorderen Ende des rohrförmigen Abschnitts (44) aufweist,
- einer antreibbaren Mischerwelle (38), die sich durch den rohrförmigen Abschnitt (44) erstreckt und in dem Gehäuse (42) drehbar gelagert ist,
- wobei die Mischerwelle (38) eine Vielzahl von von einer Achse (72) abstehenden starren Mischerelementen (74) zum Vermischen der beiden pastösen Massen aufweist, wenn diese den rohrförmigen Abschnitt (44) des Gehäuses (42) passieren, und
- einem am hinteren Ende (48) des Gehäuses (42) angeordneten und sich quer zur Achse (72) erstreckenden Einsatzteil (62), das eine dem rohrförmigen Abschnitt (44) des Gehäuses (42) zugewandte Innenseite und eine das hintere Ende (48) des Gehäuses (42) bildende Außenseite aufweist, die mit zwei Einlassstutzen versehen ist,
**dadurch gekennzeichnet,**
- **dass** die Einlassöffnungen (68,70) radial in den im wesentlichen rohrförmigen Abschnitt (44) des Gehäuses (42) einmünden,
- **dass** die Mischerwelle (38) in Höhe der radialen Einlassöffnungen (68,70) mindestens ein Umlenkelement (80) zur Umlenkung der durch die Einlassöffnungen (68,70) radial in den rohrförmigen Abschnitt (44) des Gehäuses (42) gelangenden pastösen Massen in axialer Richtung aufweist, wobei das mindestens eine Umlenkelement (80) eine sich um die Achse (72) erstreckende und schräg zu einer Radialebene der Achse (72) verlaufende Umlenkfläche (82) aufweist,
- **dass** das Einsatzteil (62) an seiner Innenseite eine zylindrische Aufnahmevertiefung (69) für den das mindestens eine Umlenkelement (80) tragenden Abschnitt der Mischerwelle (38) aufweist und
- **dass** sich von den Einlassstutzen (54,56) an der Außenseite des Einsatzteils (62) aus zwei Kanäle (64,66) erstrecken, die in die Einlassöffnungen (68,70) bildende radiale Öffnungen der zylindrischen Aufnahmevertiefung (68) an der Innenseite des Einsatzteils (62) münden.

2. Vorrichtung nach Anspruch 1, **dadurch gekennzeichnet, dass** das mindestens eine Umlenkelement (80) nach Art eines Keils ausgebildet ist.

3. Vorrichtung nach Anspruch 1 oder 2, **dadurch gekennzeichnet, dass** zwei Umlenkelemente (80) vorgesehen sind, die diametral gegenüberliegend um die Achse (72) herum angeordnet sind.

4. Vorrichtung nach einem der Ansprüche 1 bis 3, **dadurch gekennzeichnet, dass** die beiden Umlenkelemente (80) sich jeweils über einen Winkelbereich von 90° bis 180° erstrecken.

5. Vorrichtung nach einem der Ansprüche 1 bis 4, **dadurch gekennzeichnet, dass** das mindestens eine Umlenkelement (80) eine sich schraubenlinienförmig um die Achse (72) herum erstreckende Umlenkfläche (82) aufweist.

6. Vorrichtung nach einem der Ansprüche 1 bis 5, **dadurch gekennzeichnet, dass** jeweils eine gleiche Anzahl von Mischerelementen (74) Innerhalb mehrerer Radialebenen von der Achse (72) abstehen und bis nahe an die Innenfläche (76) des rohrförmigen Abschnitts (44) des Gehäuses (42) reichen.

7. Vorrichtung nach Anspruch 6, **dadurch gekennzeichnet, dass** Innerhalb von einer der Anzahl von Mischerelementen (74) pro Radialebene gleichenden Anzahl von Radialebenen jeweils zwei in Umfangsrichtung benachbarte Mischerelemente (74) untereinander über einen in Umfangsrichtung verlaufenden Teilabschnitt (78,78') verbunden sind und dass diese Paare von miteinander verbundenen Mischerelementen (74) von Radialebene zu Radialebene in Umfangsrichtung versetzt angeordnet sind.

8. Vorrichtung nach einem der Ansprüche 1 bis 7, **dadurch gekennzeichnet, dass** die Mischerwelle (38) mehrere radial abstehende Abstreiferelemente (84) aufweist, die flexibel sind und an der Innenseite (76) des rohrförmigen Abschnitts (44) des Gehäuses (42) entlangstreichende der Achse (72) abgewandte freie Enden aufweisen.

## Claims

1. A device for mixing two pasty substances, particularly for mixing a dental impression substance with a catalyst substance, comprising
- a housing (42) comprising a substantially tubular portion (44) with two inlet openings (68,70) for the two pasty substances at the rear end of the housing (42), and with an outlet opening (52) for the mixed pasty substances at the front end of the tubular portion (44),
- a drivable mixer shaft (38) extending through the tubular portion (44) and supported for rotation in the housing (42),
- the mixer shaft (38) comprising a plurality of rigid mixing elements (74) projecting from an axis (72), for mixing the two pasty substances when these pass through the tubular portion (44) of the housing (42), and
- an insert member (62) arranged on the rear end (48) of the housing (42) and extending transverse to the axis (72), the insert member (62) comprising an inner side facing towards the tubular portion (44) of the housing (42), and an outer side forming the rear end (48) of the housing (42) and provided with two inlet connectors,
**characterized in**
- **that** the inlet openings (68,70) are arranged to enter radially into the substantially tubular portion (44) of the housing (42),
- **that** the mixer shaft (38) at the level of the radial inlet openings (68,70) comprises at least one deflection element (80) for deflecting into the axial direction the pasty substances radially entering the tubular portion (44) of the housing (42) through the inlet openings (68,70), wherein the at least one deflection element (80) comprises a deflection face (82) extending around the axis (72) and oriented obliquely relative to a radial plane of the axis (72),
- **that** the insert member (62) has its inner side formed with a cylindrical receiving recess (69) for the portion of the mixer shaft (38) carrying the at least one deflection element (80), and
**that** the inlet connectors (54,56) on the outer side of the insert member (62) have two channels (64,66) extending therefrom which are arranged to enter into radial openings, forming the inlet openings (68,70), of the cylindrical receiving recess (69) on the inner side of the insert members (62).

2. The device according to claim 1, **characterized in that** the at least one deflection element (80) is wedge-shaped.

3. The device according to claim 1 or 2, **characterized in that** two deflection elements (80) are provided which are arranged diametrically opposite each other around the axis (72).

4. The device according to any one of claims 1 to 3, **characterized in that** the two deflection elements (80) extend respectively around an angular region of 90° to 180°.

5. The device according to any one of claims 1 to 4, **characterized in that** the at least one deflection element (80) comprises a deflection face (82) extending helically around the axis (72).

6. The device according to any one of claims 1 to 5, **characterized in that**, within a plurality of radial planes, respectively identical numbers of mixing elements (74) extend from the axis (72) up to the close vicinity of the inner face (76) of the tubular portion (44) of the housing (42).

7. The device according to claim 6, **characterized in that**, within a plurality of radial planes being equal in number to the mixing elements (74) per radial plane, respectively two circumferentially adjacent mixing elements (74) are connected to each other by a partial portion (78,78') extending in the circumferential direction, and that these pairs of mutually connected mixing elements (74) are displaced in the circumferential direction from each radial plane to the next radial plane.

8. The device according to any one of claims 1 to 7, **characterized in that** the mixer shaft (38) comprises a plurality of radially projecting stripper elements (84) which are flexible and have free ends arranged to sweep along the inner side (76) of the tubular portion (44) of the housing (42) and facing away from the axis (72).

## Revendications

1. Dispositif pour mélanger deux masses pâteuses, notamment une masse pour empreinte dentaire avec une masse de catalyseur, comprenant
- un boîtier (42), qui comporte une section de forme essentiellement tubulaire (44) comportant deux ouvertures d'admission (68,70) situées au niveau de son extrémité arrière pour les deux masses pâteuses, et une ouverture de sortie (52) pour les masses pâteuses mélangées, au niveau de l'extrémité avant de la section de forme tubulaire (44),
- un arbre mélangeur pouvant être entraîné (38), qui s'étend à travers la section de forme tubulaire (44) et est monté de manière à pouvoir tourner dans le boîtier (42),
- l'arbre mélangeur (38) comportant une multiplicité d'éléments mélangeurs rigides (74), qui font saillie à partir d'un axe (72) et servent à mélanger les deux masses pâteuses lorsque ces dernières traversent la section de forme tubulaire (44) du boîtier (42), et
- une partie formant insert (62), qui est disposée sur l'extrémité arrière (48) du boîtier (42), s'étend transversalement par rapport à l'axe (72) et qui comporte un côté intérieur tourné vers la section de forme tubulaire (44) du boîtier (42) et un côté extérieur, qui forme l'extrémité arrière (48) du boîtier (42) et est équipé de deux tubulures d'admission,
**caractérisé en ce**
- **que** les ouvertures d'admission (68,70) débouchent radialement dans la section de forme essentiellement tubulaire (44) du boîtier (42),
- **que** l'arbre mélangeur (38) comporte dans une direction radiale, à hauteur des ouvertures d'admission radiales (68,70), au moins un élément de déviation (80) servant à dévier les masses pâteuses qui parviennent radialement, à travers les ouvertures d'admission (68,70), dans la section de forme tabulaire (44) du boîtier (42), le au moins un élément de déviation (80) possédant une surface de déviation (82), qui s'étend autour de l'axe (72) et s'étend obliquement par rapport à un plan radial de l'axe (72),
- **que** l'élément formant insert (62) comporte, sur sa surface intérieure, un renfoncement de logement cylindrique (69) pour la section de l'arbre mélangeur (38), qui porte au moins l'élément de déviation (80), et
- **qu'**à partir des tubulures d'admission (54, 56) s'étendent, sur le côté extérieur de l'élément formant insert (62), deux canaux (64,66) qui débouchent dans des ouvertures radiales, qui forment les ouvertures d'admission (68,70), du renfoncement de logement cylindrique (72) sur la face intérieure de l'élément formant insert (62).

2. Dispositif selon la revendication 1, **caractérisé en ce que** le au moins un élément de déviation (80) est agencé sous la forme d'un coin.

3. Dispositif selon la revendication 1 ou 2, **caractérisé en ce qu'**il est prévu deux éléments de déviation (80), qui sont disposés dans des positions diamétralement opposées par rapport à l'axe (72).

4. Dispositif selon l'une des revendications 1 à 3, **caractérisé en ce que** les deux éléments de déviation (80) s'étendent respectivement sur une plage angulaire de 90° à 180°.

5. Dispositif selon l'une des revendications 1 à 4, **caractérisé en ce que** le au moins un élément de déviation (80) possède une surface de déviation (81) qui s'étend selon une courbe hélicoïdale autour de l'axe (72).

6. Dispositif selon l'une des revendications 1 à 5, **caractérisé en ce que** respectivement un même nombre d'éléments mélangeurs (74) font saillie à partir de l'axe (72) à l'intérieur de plusieurs plans radiaux et s'étendent jusqu'à proximité de la surface intérieure (76) de la section de forme tubulaire (44) du boîtier (42).

7. Dispositif selon la revendication 6, **caractérisé en ce qu'**à l'intérieur d'un nombre de plans radiaux, qui est égal au nombre d'éléments mélangeurs (74) pour chaque plan radial, respectivement deux éléments mélangeurs (74), qui sont voisins dans la direction circonférentielle, sont reliés entre eux: par l'intermédiaire d'une section partielle (78,78), qui s'étend dans la direction circonférentielle, et que ces paires d'éléments mélangeurs (74) reliés entre eux sont disposées en étant décalées d'un plan radial à l'autre dans la direction circonférentielle.

8. Dispositif selon l'une des revendications 1 à 7, **caractérisé en ce que** l'arbre mélangeur (38) comporte plusieurs éléments racleurs (84), qui font saillie radialement, sont flexibles et possèdent dès extrémités libres qui s'étendent sur le côté intérieur (76) de la section de forme tubulaire (44) du boîtier (42) et sont tournés à l'opposé de l'axe (72).
